# EUROPÄISCHE PATENTSCHRIFT

(11) **EP 1 316 121 B1**
(45) Veröffentlichungstag und Bekanntmachung des Hinweises auf die Patenterteilung: **20.10.2004**
(21) Anmeldenummer: 01964878.1
(22) Anmeldetag: 02.08.2001
(51) Int. Cl.: H01M 8/02

(54) **BIPOLARE PLATTE FÜR EINE BRENNSTOFFZELLE**
BIPOLAR PLATE FOR A FUEL CELL
PLAQUE BIPOLAIRE POUR UNE CELLULE ELECTROCHIMIQUE

(30) Priorität: 01.09.2000 DE 10043008
(43) Veröffentlichungstag der Anmeldung: 04.06.2003
(73) Patentinhaber: Forschungszentrum Jülich GmbH, 52425 Jülich (DE)
(72) Erfinder: DOHLE, Hendrik, 52224 Stolberg-Mausbach (DE); BEWER, Thomas, 52074 Aachen (DE)
(86) Internationale Anmeldenummer: PCT/DE2001/002959
(87) Internationale Veröffentlichungsnummer: WO 2002/019453

(56) Entgegenhaltungen:
- EP-A- 0 884 794
- DE-A- 19 815 796
- US-A- 4 619 753
- US-A- 6 015 633
- PATENT ABSTRACTS OF JAPAN vol. 010, no. 032 (E-379), 7. Februar 1986 (1986-02-07) & JP 60 189868 A (FUJI DENKI SOUGOU KENKYUSHO:KK;OTHERS: 01), 27. September 1985 (1985-09-27)

## Beschreibung

Die Erfindung betrifft eine bipolare Platte für den Einsatz in einer Brennstoffzelle, bzw. in einem Brennstoffzellenstapel, insbesondere für den Einsatz in einer Niedertemperatur-Brennstoffzelle.

### Stand der Technik

Ein Brennstoffzellenstapel besteht aus mehreren Einzelbrennstoffzellen, die über sogenannte bipolare Platten hintereinander geschaltet sind. Die bipolaren Platten bilden eine gasdichte Trennung zwischen den Anoden- und den Kathodenräumen. Sie dienen dabei sowohl zur Stromableitung, als auch zur Verteilung der entsprechenden Betriebsstoffe auf die Elektrodenoberflächen.

Zur Verteilung der Betriebsstoffe werden unterschiedlich strukturierte bipolare Platten eingesetzt.

Aus US - 4 988 583 ist eine bipolare Platte bekannt, bei der mäanderförmig verlaufende Kanäle, die teilweise parallel verlaufen, ausgebildet sind. Diese Art von bipolarer Platte gewährleistet sowohl bei niedrigen Durchflüssen (Teillastbetrieb), als auch bei hohen Durchflußraten (Vollastbetrieb) eine gute Gleichverteilung der Betriebsstoffe auf die Elektrodenoberfläche.

Nachteilig bewirkt diese Struktur jedoch bei hohen Durchflußraten hohe Druckverluste, so daß zur Kompensation die Betriebsstoffe unter hohem Druck zugeführt werden müssen. Dies wirkt sich nachteilig auf das Gesamtsystem der Brennstoffzelle aus.

Ferner ist aus US-A 4,619,753 eine bipolare Platte bekannt, die einen kammartigen porösen Bereich und einen daran angrenzenden nicht porösen Bereich aufweist. Einzelnen Aussparungen der kammartigen Struktur bilden freie Kanäle zur Durchleitung eines Betriebsmittels. Diese Kanäle haben keinen direkten Kontakt zur Elektrodenoberfläche. Nachteilig muss bei dieser bipolaren Platte das Betriebesmittel in jedem Fall zunächst durch einen porösen Bereich strömen, um an die Elektrodenoberfläche zu gelangen.

### Aufgabe und Lösung

Aufgabe der Erfindung ist es, ausgehend vom Stand der Technik eine bipolare Platte zu schaffen, die im Einsatz in einer Brennstoffzelle selbst bei unterschiedlichem Lastverhalten der Brennstoffzelle eine gute Gleichverteilung des Betriebsmittels bei gleichzeitig geringem Druckverlust aufweist und somit regelmäßig einen hohen Wirkungsgrad erzielt.

Die Aufgabe wird gelöst durch eine bipolare Platte gemäß Hauptanspruch sowie durch eine Brennstoffzelle gemäß Nebenanspruch. Vorteilhafte Ausführungsformen finden sich in den darauf rückbezogenen Ansprüchen.

### Der Gegenstand der Erfindung

Die bipolare Platte nach Anspruch 1 weist wenigstens einen Kanal zur Durchführung eines Betriebsmittels und wenigstens einen an diesen Kanal angrenzenden porösen Bereich auf. Ferner sind der Kanal und der poröse Bereich in einer Ebene angeordnet und für einen direkten Kontakt mit einer Elektrode vorgesehen.

Die bipolare Platte kann allein, z. B. in Form eines Rohres, oder auch zusammen mit der Elektrode einen Kanal ausbilden, z. B. über eine kammartige Struktur. Die durch die bipolare Platte gebildeten Kanäle bewirken zusammen mit den porösen Bereichen im direkten Kontakt mit der Elektrode vorteilhaft eine rasche Verteilung des Betriebsstoffes über die angrenzende Elektrode.

Unter einem porösen Bereich der bipolaren Platte ist zu verstehen, dass diese zumindest teilweise aus einem porösen Material mit durchgehender Porosität besteht. Grenzt ein solcher poröser Bereich an einen von der bipolaren Platte gebildeten Kanal, so bewirkt dieser poröse Bereich nicht nur eine Verteilung des Betriebsmittels in den dafür vorgesehenen Kanälen, sondern auch innerhalb eines porösen Bereichs. Gleichzeitig ermöglicht der poröse Bereich damit regelmäßig eine Verringerung des Strömungswiderstandes beim Durchleiten eines Betriebsmittels.

Als ein vorteilhaft geeignetes Material für den porösen Bereich ist beispielsweise ein Drahtgewebe oder auch ein leitfähiges Vlies, z. B. ein Edelstahlvlies, zu nennen. Das Material ist für den Einsatz in einer Brennstoffzelle konzipiert. Es geht keine Reaktionen mit den Betriebsmitteln ein und ist selbst elektrisch leitend.

In einer weiteren Ausführungsform der Erfindung befinden sich die porösen Bereiche der bipolaren Platte an den Stellen, die für den Kontakt mit einer Elektrode vorgesehen sind. Damit ist die Versorgung der Elektrode mit Betriebsmitteln auch an den Stellen sichergestellt, die in Kontakt mit der bipolaren Platte stehen. An diesen Kontaktpunkten (Stegen) zwischen bipolarer Platte und Elektrode findet beim Stand der Technik regelmäßig nur geringfügig ein elektrochemischer Umsatz statt, da das Betriebsmittel dort nicht an die Elektrode herangeführt wird. Bei der erfindungsgemäßen bipolaren Platte kann jedoch das Betriebsmittel die offenen Poren des porösen Bereiches durchströmen und so bis an die Elektrode gelangen.

Bei einer weiteren vorteilhaften Ausführungsform der Erfindung weist diese mäanderförmige Kanäle auf, insbesondere für einen Brennstoff.

Eine weitere vorteilhafte Ausführungsform der bipolaren Platte bildet kammartige Kanäle aus, insbesondere zum Durchleiten des Oxidationsmittels. In beiden Fällen weisen vorteilhaft jeweils die Stege die porösen Bereiche auf.

Die Stege sind die Bereiche der bipolaren Platte, die in einer Brennstoffzelle für den Kontakt mit einer Elektrode vorgesehen sind. Die poröse Struktur innerhalb der Stege bewirkt somit eine besonders gute Verteilung der Betriebsmittel, die nicht nur direkt durch die Kanäle, sondern auch indirekt durch die poröse Struktur bis an die Elektrodenoberfläche gelangen. Gleichzeitig können Strömungsverluste vorteilhaft verringert werden.

Vorteilhaft wird die erfindungsgemäße bipolare Platte in einer Brennstoffzelle eingesetzt. Hierbei werden zwei Strukturen ausgenutzt. Kanäle verteilen ein Betriebsmittel gut bei niedrigen Durchflüssen, weisen jedoch bei hohen Durchflüssen hohe Druckverluste auf. Offene Poren führen bei hohen Durchflüssen nur zu geringen Druckverlusten, führen jedoch bei geringen Durchflüssen nur zu einer schlechten Verteilung des Betriebsmittels.

Die Erfindung nutzt die Vorteile beider Strukturen und ermöglicht damit eine verbesserte Gleichverteilung der Betriebsmittel im gesamten Lastverhalten einer Brennstoffzelle bei gleichzeitig geringem Druckverlust.

### Beschreibung der Zeichnungen

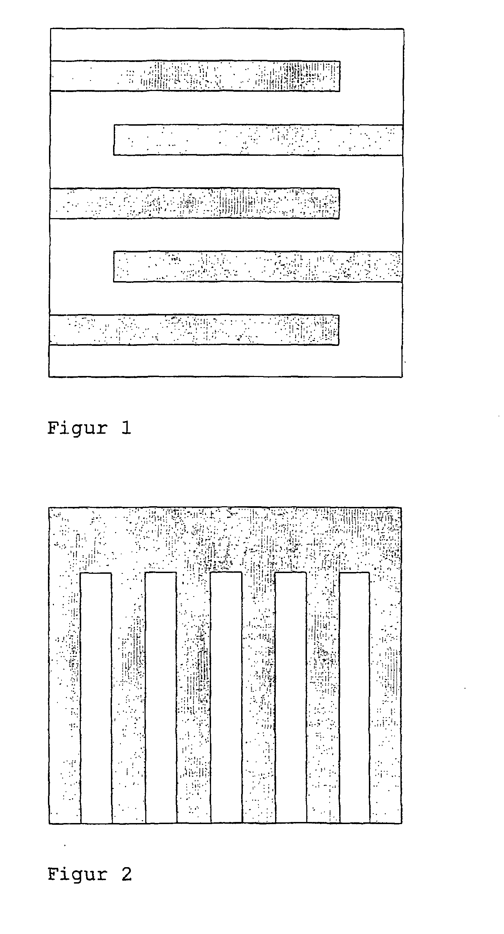

Die schematischen Figuren 1 und 2 zeigen zwei Ausführungsbeispiele der erfindungsgemäßen bipolaren Platte. Figur 1 ist besonders vorteilhaft für den Anodenbereich einer Brennstoffzelle konzipiert. Die weißen Bereiche zeigen die traditionelle mäanderförmige Anordnung eines Brennstoffkanals, wobei die Stege durchgehend gemäß der Erfindung aus porösem Material bestehen.

Analog zeigt die Figur 2 eine Ausführungsform für den Kathodenraum einer Brennstoffzelle. Durch eine Kammstruktur aus porösem Material werden einzelne Oxidationsmittelkanäle geschaffen.

### Ausführungsbeispiele

### 1. Beispiel:

Bei einer Direkt-Methanol-Brennstoffzelle entsteht im Anodenraum CO₂, welches gasförmig vorliegt. Zur Abführung dieser CO₂-Gasblasen und um Strömungsverluste zu vermeiden, benötigt der Anodenraum ein Mindestmaß an Bauraum. Bei herkömmlichen Gasverteilerstrukturen einer bipolaren Platte wird das Betriebsmittel direkt an die Elektrodenoberfläche geführt. Die Kontaktfläche zwischen bipolarer Platte und Elektrodenoberfläche (Stege) trägt dabei kaum zur Umsetzung bei. Durch die erfindungsgemäße bipolare Platte mit porösen Strukturen im Bereich der Stege kann die Verteilung des Betriebsmittels auch unterhalb der Stege erfolgen. Damit kann die Umsetzung gesteigert und/oder eine kompaktere Bauweise ermöglicht werden. Gleichzeitig wird eine effektivere Entfernung der CO₂-Blasen gewährleistet.

### 2. Beispiel:

Bei den bisher bekannten Direkt-Methanol-Brennstoffzellen und Polymerelektrolyt-Membran-Brennstoffzellen tritt das Problem auf, daß kathodenseitig Wasser entsteht und auch Wasser von der Anodenseite her durch Elektroosmose durch die Membran, bzw. den Elektrolyten hinübertritt. Dieses Wasser verstopft regelmäßig die Kanäle auf der Kathodenseite, so daß dort Transporthemmungen hinsichtlich des Sauerstoffs auftreten. Dadurch wird die Leistung und der Wirkungsgrad der Brennstoffzelle nachteilig negativ beeinflußt. Durch die erfindungsgemäße Verteilerstruktur der bipolaren Platte wird durch den Verzicht auf einen Kathodenabgassammelkanal und die Abfuhr des Wassers über die gesamte Fläche eine effektivere Entfernung des Wassers gewährleistet. Zudem bietet die Ausführungsform gemäß Figur 2 dem Gas bei verstopften Kanälen die Möglichkeit, durch die hydrophobierten porösen Bereiche zu gelangen.

## Patentansprüche

1. Bipolare Platte für eine Brennstoffzelle mit wenigstens einem freien Kanal zur Durchführung eines Betriebsmittels und wenigstens einen daran angrenzenden porösen Bereich,
**dadurch gekennzeichnet,**
- **dass** der Kanal und der poröse Bereich in einer Ebene angeordnet und für einen direkten Kontakt mit einer Elektrode vorgesehen sind und
- **dass** der poröse Bereich für ein Betriebsmittel durchströmbar ausgestaltet ist.

2. Bipolare Platte nach vorhergehendem Anspruch, mit zumindest teilweise parallel verlaufenden Kanalabschnitten, bei der alle Stege zwischen den Kanalabschnitten porös ausgestaltet sind.

3. Bipolare Platte nach einem der vorhergehenden Ansprüche 1 bis 2, mit einem leitfähigen Vlies als Material für den porösen Bereich.

4. Bipolare Platte nach einem der vorhergehenden Ansprüche 1 bis 3 mit einem mäanderförmigen Kanal zur Durchleitung eines Betriebsmittels, insbesondere für einen Brennstoff.

5. Bipolare Platte nach einem der vorhergehenden Ansprüche 1 bis 3 mit einem kammartigen Kanal zur Durchleitung eines Betriebsmittels, insbesondere für ein Oxidationsmittel.

6. Brennstoffzelle mit einer bipolaren Platte nach einem der vorhergehenden Ansprüche 1 bis 5.

7. Brennstoffzelle nach vorhergehendem Anspruch, bei der der poröse Bereich und der freie Kanal direkt an eine Elektrode grenzen.

## Claims

1. Bipolar plate for a fuel cell with at least one free channel for passing an operating medium and at least one porous region adjacent thereto,
**characterized in that**
the channel and the porous region are arranged in one plane and are provided with an electrode for direct contact and **in that**
the porous region is configured so as to be traversable by an operating medium.

2. Bipolar plate according to the preceding claim with at least partly parallel channel sections, wherein all lands between channel sections are configured so as to be porous.

3. Bipolar plate according to either of the preceding claims 1 and 2 with a conductive web as material for the porous region.

4. Bipolar plate according to any one of the preceding claims 1 to 3 with a serpentine channel for passing an operating medium, in particular a fuel.

5. Bipolar plate according to any one of the preceding claims 1 to 3 with a comblike channel for passing an operating medium, in particular an oxidizing agent.

6. Fuel cell with a bipolar plate according to any one of the preceding claims 1 to 5.

7. Fuel cell according to the preceding claim wherein the porous region and the free channel directly border on an electrode.

## Revendications

1. Plaque bipolaire pour une pile à combustible avec au moins un canal libre pour le passage d'un combustible et au moins une zone poreuse contiguë à ce canal,
**caractérisée en ce que** :
- le canal et la zone poreuse sont disposés sur une surface et sont prévus pour être en contact direct avec une électrode, et
- la zone poreuse est conçue de manière à pouvoir être traversée par un combustible.

2. Plaque bipolaire selon la revendication précédente, avec des segments du canal au moins partiellement parallèles, dans laquelle toutes les entretoises entre les segments du canal sont conçues de manière poreuse.

3. Plaque bipolaire selon l'une des revendications 1 à 2, avec un non-tissé conducteur comme matériau pour la zone poreuse.

4. Plaque bipolaire selon l'une des revendications 1 à 3, avec un canal en forme de méandre afin de guider un combustible, en particulier pour une pile à combustible.

5. Plaque bipolaire selon l'une des revendications précédentes 1 à 3, avec un canal en forme de peigne afin de guider un combustible, en particulier pour un agent d'oxydation.

6. Pile à combustible avec une plaque bipolaire selon l'une des revendications précédentes 1 à 5.

7. Pile à combustible selon la revendication précédente, dans laquelle la zone poreuse et le canal libre sont contigus à une électrode.
